Europäisches Patentamt

European Patent Office

Office européen des brevets

(11) Publication number: **0 224 664**
**A1**

# (12) EUROPEAN PATENT APPLICATION

(21) Application number: **86112446.9**

(22) Date of filing: **09.09.86**

(51) Int. Cl.4: **G02B 6/38 , G02B 6/32**

(30) Priority: **04.10.85 FR 8514765**

(43) Date of publication of application:
**10.06.87 Bulletin 87/24**

(84) Designated Contracting States:
**DE GB IT SE**

(71) Applicant: **SOCAPEX**
**10 bis, quai Léon Blum**
**F-92153 Suresnes(FR)**

(72) Inventor: **Clement, Patrick**
**18 rue du President Wilson**
**F-78230 Le Pecq(FR)**
Inventor: **Collignon, Roger**
**44 rue de Parc**
**F-91430 1GNY(FR)**
Inventor: **Malinge, Jean-Louis**
**10 rue Develly**
**F-92310 Sevres(FR)**

(74) Representative: **Brullé, Jean et al**
**Service Brevets Bendix 44, rue François 1er**
**F-75008 Paris(FR)**

(54) **Hermaphroditic connector for optical fibers.**

(57) A hermaphroditic connector with an intermediate optic connection in which a micro-lens (26) fixed at the end of each fiber (10) to as to make the light beam carried by this fiber afocal. The alignment of the optical axes is obtained from a drum (12).

FIG_1

## HERMAPHRODITIC CONNECTOR FOR OPTICAL FIBERS

BACKGROUND OF THE INVENTION

Field of the Invention

The present invention relates to hermaphroditic connector elements for optical fibers and in particular those permitting multichannel connections.

Description of the Prior Art

Hermaphroditic connectors are connectors capable of cooperating with an identical counterpart after being engaged with the later. Optical connectors are subject to rigorous positioning constraints on their principal constituents. In fact, the alignment of the fibers must be very precise to minimize the optical losses of the connector. It is therefore necessary to provide means of centering the optical fibers in their connector elements and to impart a precise structure to these which leads to the exact alignment of each fiber of an element with the corresponding fiber of the other when the two connector elements are connected. Moreover these connectors have to be leakproof because optical connections are very sensitive to weather conditions and dust. It is advantageous if the opposing faces of the connector elements can be protected by protective glass and very easily cleaned.

Hermaphroditic connector elements for optical fibers use either calibrated holes or cone systems as their alignment base. For example, French patent application 2,456,334 discloses a hermaphroditic connector element with conical centering of the optical points and nonremovable protective glass.

The products obtained according to prior art have some practical disadvantages. It is very difficult, in fact, to drill a part with holes perfectly perpendicular to a given plane. Another exigency has appeared while in use; the protective glass has to be removable to permit easy cleaning of the interface existing between the ends of the fibers to be connected, to protect the lenses disposed at these ends and permit fast replacement in case of scratches.

SUMMARY OF THE INVENTION

In accordance with this invention, there is provided a hermaphroditic connector for optical fibers assuring at least one fiber-to-fiber optical link with a counterpart, characterized in that it comprises, mounted in a shell, a tip fixed at the end of the fiber and associated with a lens to form an optical point, the tip having a plane surface defining a plane of reference perpendicular to the axis of the optical point; a drum having its two plane faces strictly parallel to one another and pierced from one face to the other with a hole for each optical point, the hole receiving the tip whose plane of reference is kept parallel to the faces of the drum by mounting means; and means of positioning the connector on its counterpart to assure the optical link.

To remedy these drawbacks of the prior art, the present invention proposes a hermaphroditic connector element with an intermediate optical device, that is to say that a microlens is fixed at the end of each fiber so as to make the light beam carried by this fiber afocal. The alignment of the optical axes is obtained from a reference part having two strictly parallel planes, which is easier to obtain than the drilling of holes perpendicular to a plane.

The connector element according to the invention will advantageously be equipped with locking ramps.

Ancillary elements may complete the assembly. A linking piece assures the anchoring of the central core of the optical cable. It is advantageous to use this linking piece to press the tip against the drum by means of a spring.

In addition, a pin mounted transversely on the drum will permit its indexing.

And finally, the means of positioning can be assured by a needle lodged in the drum and penetrating into a bore in the drum of the counterpart when the positioning of the two connector elements is correct.

BRIEF DESCRIPTION OF THE DRAWINGS

Figure 1 is a sectional view of a connector element according to the invention.

Figure 2 is a sectional view of a unit constituting an optical point.

Figure 3 represents an optical plug with two fibers according to the invention.

Figure 4 represents a connector obtained by assembly of two plugs with a protected locking system.

Figure 5 represents a plug equipped with a protective stopper.

## DESCRIPTION OF THE PREFERRED EMBODIMENTS

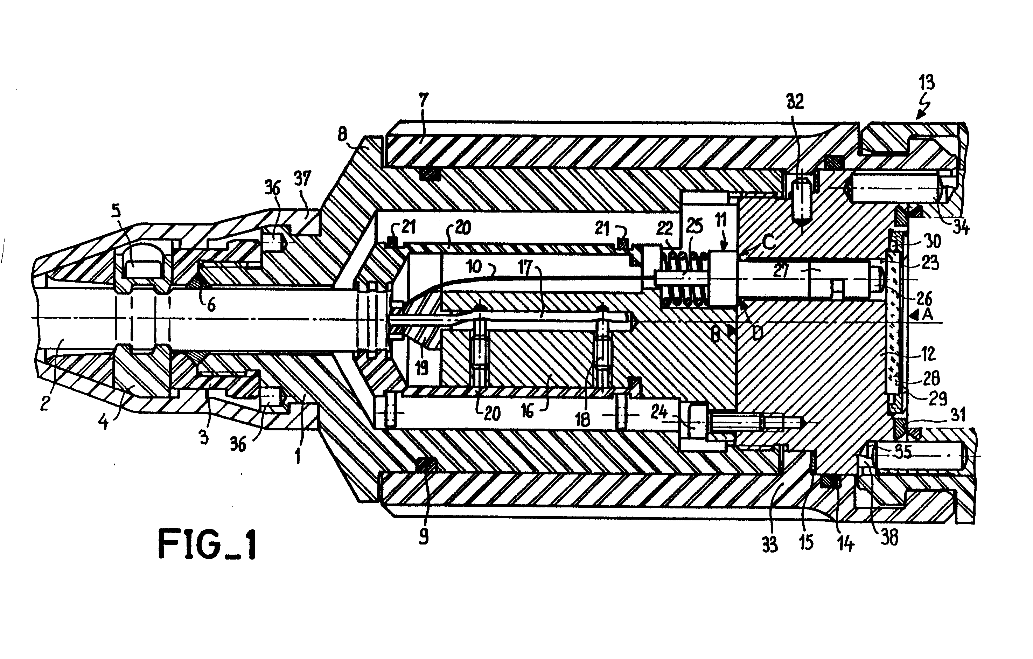

Figure 1 is a sectional view of an elaborate version of a connector element according to the invention. The element represented is a plug in the present case, but the invention applies equally well to other elements such as a socket. For simplicity, the plug shown has one optical fiber but it can have a plurality of them.

The plug represented in Figure 1 comprises a shell 1 which can be of metal. This shell has a generally cylindrical form. Its front part is wide open and its rear part has an opening for passage of an optical cable 2. Cable 2 is integrated with shell 1 by a sleeve 3 which is screwed onto the rear part of shell 1. This sleeve, made of plastic, for example, is split transversely to permit being clamped on cable 1 by a cable clamp 4 lodged in the split in sleeve 3. The cable clamp will be clamped on the cable by a screw 5. To complete the seal of the rear part of the plug, there can be a toric gasket 6 compressed on the cable when the sleeve is screwed onto the shell.

A locking ramp 7 which will be described more completely below is engaged with a little play on the outer part of shell 1 from its face forward and up to a shoulder 8 of shell 1. The sealing of the plug at this point is as assured by a toric gasket 9 lodged in a slot formed in the shell. To facilitate the placement of the locking ramp and the fitting or toric gasket 9, its bore is slightly flared from its rear face. Likewise the front face of the shell is slightly beveled.

The end of the optical cable which is inside the shell is prepared so as to free a length of fiber sufficient to enable the fiber to bend without risk of breaking. Fiber 10 is fixed at its end to a unit 11 constituting an optical point. This optical point will be described in detail below. It has a plane C which will serve as a reference for the optical point. It is the base of reference of the fiber-lens alignment.

The bore in shell 1 is threaded on the front face to receive a part playing an important role in the connector element constituted by the plug, this part being a drum 12. Its two plane faces A and B are, by construction, strictly parallel to one other. Reference numeral 13 refers to part of another connector element assembled to the plug. This element can also be a plug, or a socket. In any event, it incorporates a drum of the same type as drum 12. Plane A is therefore common to the two coupled elements. Since planes A and B are themselves parallel, it follows tht the two planes B of the coupled elements are parallel. Again, for sealing purposes, a toric gasket 14 is lodged in a slot in the locking ramp. A washer 15 is placed between drum 12 and ramp 7 to limit the rubbing contacts resulting from the manipulations of the connector. Washer 15 is made of an appropriate material such as polytetrafluoroethylene commonly known as Teflon.

In order for the axes of the optical points placed facing one another to be parallel, the planes B and C must be strictly parallel. They can be merged by pressing unit 11 onto drum 12 by a mounting means which can be embodied in various ways. It is advantageous to use, for this purpose, a linking piece 16 which can also serve as an anchor piece for the optical cable by retention of its central core 17.

Central core 17 is engaged in a hole in linking piece 16 and fixed therein, for example, by one or more screws 18 in the case of a metal core. When screws are used, it is desirable, as shown in Figure 1, that the holes receiving these screws be drilled beyond the hole receiving core 17. This makes it possible to obtain attachment points for the central core. A brace 19 can be provided between the carrying sheath of cable 2 and linking piece 16. If the central core is made of glass fiber, the screws are advantageously replaced by adhesive. The unit can be completed by two half-shells 20 united by circlips 21. These half-shells make it possible to consolidate the inner part of the plug by pressing on the one hand on linking piece 16 and on the other hand by gripping optical cable 2. The presence of linking piece 16, fixed on drum 12 by screws 24, permits the use of a spring 22 pressing unit 11 on drum 12.

Optical point 11 is lodged in a hole 23 passing thorugh drum 12. The centering D of optical contact 11 in hole 23 is very precise but takes no preponderant part in the optical alignment. After making the connection between two connector elements, the two faces B of the opposing drums are parallel. Consequently, the axes of the opposing optical points are parallel. A perfect alignment of these axes is not necessary since this has little effect on the attenuation. However, the invention does permit a considerably reduction in any angle between the axes of the optical points, which is very important. Optical point 11 also comprises a centering tube 25, a bar lens 26 and a centering device 27. The interface constituted by the distance separating two opposing lenses in a connector is on the order of a few millimeters and is occupied by a protective glass 28 on each connector element. This protective element is made of a transparent material, such as a mineral glass that has received an anti-reflection treatment on both of its faces. Protective glass 28 is fixed on the drum by a screw 29 in the form of a ring, and sealed by a toric gasket 30. A washer 31 seals the interface after connection.

Drum 12 also has a transverse hole accommodating an indexing pin 32. The emerging part of pin 32 occupies an indexing cavity machined in shoulder 23 of locking ramp 7.

To complete the description the following elements are mentioned. Drum 12 is pierced on the interface side with two holes. One of them is to lodge a force-fitted pin 24 whose emerging end will be placed, when the connection is made, in a receiving bore situated in the drum of the counterpart. Inversely, the second hole 35 is meant to receive an indexing pin lodged with force in the drum of the counterpart. Hole 35 has a cutaway 38 for forcing out any contamination at the moment of connection. Shell 1 comprises, at its rear, two holes 36 to receive a tightening wrench which is used as the drum is fixed on the shell. A heat shrinking sleeve 37 completes the rear part of the plug. If central core 17 of the optical cable is made of glass fiber, the glue for fixing the core in its lodging will be deposited through an opening made in linking piece 16.

The assembly of the various part of the plug presents no particular problem and the order of placement of these pieces is readily determined by a study of the drawing in Figure 1.

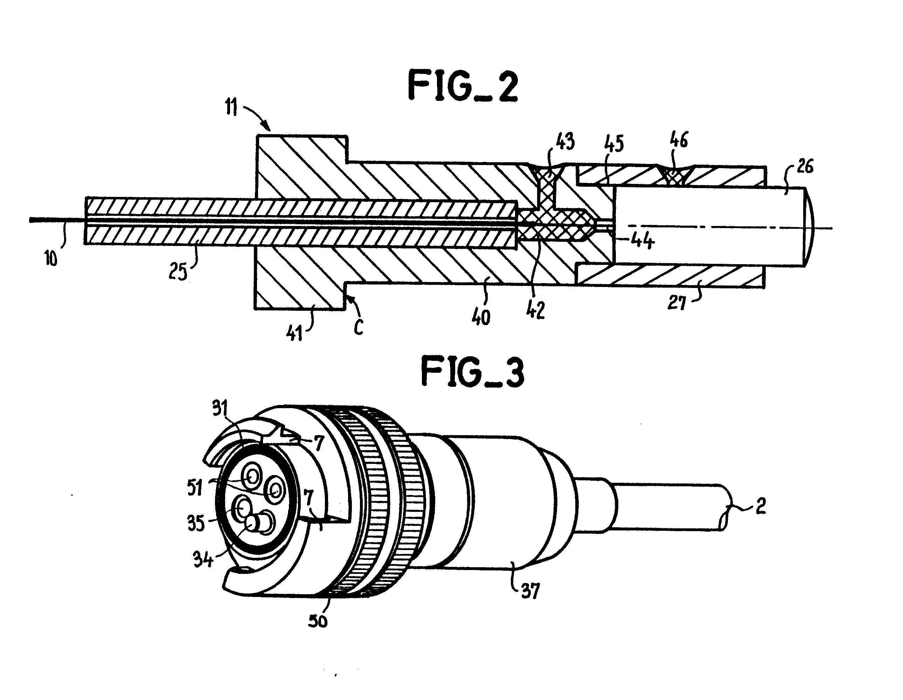

Figure 2 presents a detailed view of optical point 11. It is constituted by a tip 40 of generally cylindrical form whose rear part has a shoulder 41 furnishing the plane of reference C. Tip 40 is pierced longitudinally with a bore comprising parts of different diameters. In its larger-diameter part centering tube 25 will be lodged with a mild force. The bore of this tube is of small diameter to permit the guidance of optical fiber 10. The bore of the tip comprises a median part or cavity 42 connected to a transverse hole 43 flared at its entry. The last part of the bore of the tip is constituted by a centering hole 44 of short length and small diameter. After positioning the optical fiber, whose end is stripped and abuts on the plane face of a bar lens 26, cavity 42 is filled with a sealing resin introduced through hole 43. Centering device 27 serves to hold lens 26 in position. It is fixed on the tip by shoulder 45 and has a transverse hole 46 for the introduction of a sealing resin for the lens.

The primary optical point is obtained by optimizing the lens in reflection before the fiber facing a mirror, for example by using a coupler. At its other end the fiber is molded in a tip in such a way as to be able to inject a laser beam. On the lens side the beam is cast by a well defined spot of about 40 mm in diameter at a distance of about 3 m. If the optical point is held in a V and rotated 90° four times, there is obtained four circles more or less separated from one another depending on the quality of the primary optical point. The center of the circle circumscribed in these four circles is considered to be the theoretical center of the ideal projection and the following optical points will be centered on this center point.

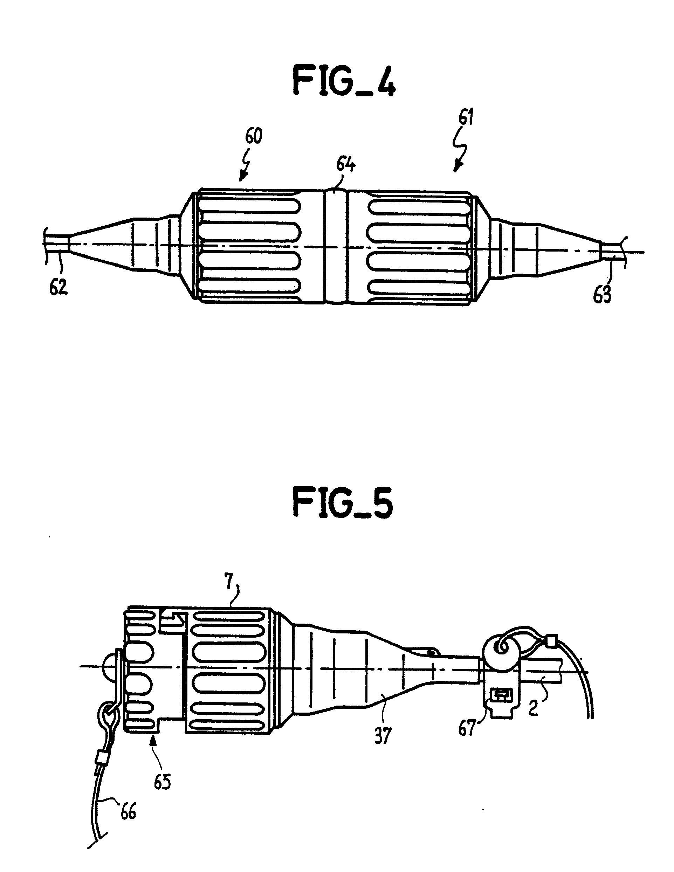

Figure 3 represents an optical plug according to the invention. This view provides a good perspective of the locking ramps 7 which are equipped with a locking nut 50. There is also shown in this figure optical cable 2, heat shrinking sleeve 37, pin 34, pin-reception hole 35 and gasket 31. Reference numeral 51 designates the optical paths which in this precise case are two in number. The locking is assured by a system of spiral ramps based on the linear cam principle. The angular segments and the pitches of these ramps are calculated to permit a fast, easy and dependable connection. In the case of a plug-to-plug link, each nut, mobile in rotation, participates in the connection and presses the two planes A in a quarter turn.

The connector in Figure 4 comprises two plugs 60 and 61 linking, respectively, two optical cables 62 and 63. The locking ramps here are protected from moisture and dust by a rubber sheath 64.

When not in use, the interface is protected by a lossproof stopper 65 as represented in Figure 5, attached by a strap 66 to a collar 67 fixed in cable 2.

The present connector provides optical losses of less than 3dB per channel for optical fibers of 50/125 m (50 m of core for 125 m of sheath).

## Claims

1. A hermaphroditic connector for optical fibers assuring at least one fiber-to-fiber optical link with a counterpart, characterized in that it comprises, a shell (1), a tip (40) fixed at the end of a fiber (10) and associated with a lens (26) to form an optical point, said tip having a plane surface (C) defining a plane of reference perpendicular to the axis of the optical point, a drum (12) having two plane faces (A,B) strictly parallel to one another and pierced from one face to the other with a hole (23) for each optical point, said hole receiving the tip whose plane of reference is kept parallel to the faces of the drum by mounting means, and means of positioning said connector on its counterpart to assure the optical link.

2. A connector according to claim 1, characterized in that there are provided locking ramps (7).

3. A connector according to either claim 1 or 2, characterized in that it comprises a linking piece - (16) mounted in said shell (1) and fixed on said drum (12).

4. A connector according to claim 3, characterized in that said linking piece (16) assures the anchorage of a central core (17) of an optical cable (2) including said fiber (10).

5. A connector according to either claim 3 or 4, characterized in that it comprises a brace (19) situated between said linking piece (16) and the end of the carrying sheath of said cable (2).

6. A connector according to any one of claims 1 to 5, characterized in that it comprises two half-shells (20) surrounding the end of optical cable (2) and enclosing said fiber (10).

7. A connector according to any one of claims 1 to 6, characterized in that said mounting means comprises a spring (22) pressing said tip (40) on said drum (12).

8. A connector according to any one of claims 1 to 7, characterized in that said optical point comprises a tube (25) to assure the centering of said fiber (10) on said tip (40), said lens (26) being a bar lens joined to said tip by a centering device - (27).

9. A connector according to any one of claims 1 to 8, characterized in that includes with a removable glass (28) to protect said lens (26).

10. A connector according to any one of claims 1 to 9, characterized in that said drum (12) is equipped with a pin (32) for indexing said drum relative to said shell (1).

11. A connector according to any one of claims 1 to 10, characterize in that said means of positioning comprises a pin (34) lodged in one of the plane faces (A) of the drum and a bore (35) receiving a pin situated in the drum of the counterpart connector.

FIG_1

0 224 664

# FIG_2

# FIG_3

0 224 664

# FIG_4

# FIG_5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 558 152 (THE GENERAL ELECTRIC COMPANY LTD) * Page 4, lines 79-130; page 5, lines 59-115; page 6, line 21; figure 1 * | 1,2,8 | G 02 B 6/38 G 02 B 6/32 |
| A | | 6 | |
| A | OPTICS AND LASER TECHNOLOGY, vol. 14, no. 2, April 1982, pages 87-91, Butterworth & Co. Ltd, GB; P.R. COOPER et al.: "A fibre optic connector suitable for use in a rugged environment * Paragraph: "Connector design"; figure 8 * | 1,2,4, 6-9 | |
| A | FR-A-2 530 829 (THORN-EMI) * Page 3, line 9 - page 5, line 11; figure 1 * | 1-4,7, 8 | TECHNICAL FIELDS SEARCHED (Int. Cl.4) G 02 B 6 |
| A | WO-A-8 400 617 (HUGHES AIRCRAFT) * Figure 1; abstract * | 1,2,4, 6,8,10 | |
| A | GB-A-2 148 536 (DEUTSCH CO.) * Figures 1,2 * | 1,8 | |
| | --- -/- | | |

The present search report has been drawn up for all claims

| Place of search | Date of completion of the search | Examiner |
|---|---|---|
| THE HAGUE | 06-02-1987 | PFAHLER R. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,A | EP-A-0 166 636 (RADIALL IND.) <br> * Page 4, line 16 - page 6, line 18; figures 1,2 * | 1-5 | |

-----

TECHNICAL FIELDS
SEARCHED (Int. Cl.4)

The present search report has been drawn up for all claims

| Place of search | Date of completion of the search | Examiner |
|---|---|---|
| THE HAGUE | 06-02-1987 | PFAHLER R. |